Europäisches Patentamt

European Patent Office

Office européen des brevets

(19)

(11)  EP 0 927 875 B1

(12)  **FASCICULE DE BREVET EUROPEEN**

(45)  Date de publication et mention
de la délivrance du brevet:
**14.08.2002  Bulletin 2002/33**

(51)  Int Cl.[7]:  **G01F 1/684**, G01F 1/692

(21)  Numéro de dépôt: **97403185.8**

(22)  Date de dépôt: **30.12.1997**

(54)  **Procédé de réalisation d'un capteur pour un débitmètre massique thermique**

Verfahren zu Herstellung von einem Sensor für einen thermischen Massendurchflussmesser

Method of manufacture of a sensor for a thermal mass flow meter

(84)  Etats contractants désignés:
**AT BE CH DE DK ES FI FR GB GR IE IT LI LU MC
NL PT SE**

(43)  Date de publication de la demande:
**07.07.1999  Bulletin 1999/27**

(73)  Titulaire: **Qualiflow S.A.
34935 Montpellier Cedex 9 (FR)**

(72)  Inventeurs:
• **Rudent, Pascal
34000 Montpellier (FR)**
• **Boyer, André
34090 Montpellier (FR)**
• **Giani, Alain
34920 Le Cres (FR)**

(74)  Mandataire: **Ravina, Bernard
Cabinet Bernard RAVINA
24, boulevard Riquet
31000 Toulouse (FR)**

(56)  Documents cités:
**EP-A- 0 131 318          EP-A- 0 809 090
DE-A- 3 220 170          DE-A- 3 229 609
DE-A- 4 335 332**

• **JOUWSMA W: "MARKETING AND DESIGN IN
FLOW SENSING" SENSORS AND ACTUATORS
A, vol. A37-A38, 1 juin 1993, LAUSANNE, CH,
pages 274-279, XP000411403**

**Description**

La présente invention est du domaine des dispositifs de mesure de débit de fluides dans une canalisation. Le capteur de débit massique est destiné à être incorporé dans un débitmètre massique placé dans une chaîne de gestion et de contrôle de circulation de gaz de haute pureté par exemple.

Ces débitmètres massiques, comportent usuellement un tube capillaire de circulation du fluide, sur lequel les mesures représentatives du débit sont effectuées, disposé en parallèle avec le circuit principal de circulation du fluide.

De nombreux types de débitmètres massiques sont déjà connus de l'homme de l'art. Le principe des capteurs de débit à pont de Wheatstone et mesure de différence de température est connu depuis 1947 (brevet US Kronberger and Brown). Ils sont le plus souvent basés sur un chauffage local du fluide passant dans le tube capillaire, et une mesure de variation de résistance d'éléments résistifs en fonction de la température, ladite mesure étant représentative du flux de gaz dans le tube, et donc du débit. Les deux résistances de mesure, de valeur égale, possédant une grande résistivité et un grand coefficient de variation avec la température, sont le plus souvent simplement bobinées autour du tube capillaire isolé (US Patent 3 938 384). Ces résistances, alimentées par un courant constant, chauffent le tube mais servent donc également de moyens de mesure de température. Un des inconvénients de ce type de capteur est l'importante masse thermique de ces résistances bobinées, ce qui engendre un temps de réponse assez long.

Parmi les autres dispositifs connus, on peut citer la demande de brevet européen 0 131 318 131 (Brookhorst 1984), qui pose le problème de la dérive du point zéro de mesure lorsque le fluide lui-même est de température variable, et suggère un principe de montage de capteur de débit à base de quatre résistances sensibles à la température déposées de façon non détaillée sur une couche de nature non précisée. Les résistances sont montées en pont de Wheatstone de façon classique.

Dans une autre demande (EP 0 395 126 B1), Bronkhorst propose une géométrie de tube en U très allongé, et doté de séries de thermocouples placés symétriquement et d'une résistance chauffante centrale en deux parties, ainsi éventuellement que d'éléments de refroidissement Peltier, pour palier les problèmes d'erreur de mesure liée à une circulation d'air à l'extérieur du capteur ou de convection interne au tube capillaire.

Le brevet US 5 373 737 (Goldstar 1993) présente un capteur de débitmètre massique insensible aux variations de température extérieure, utilisant deux résistances bobinées à l'extérieur du tube de circulation de fluide, montées en pont de Wheatstone et un élément de refroidissement placées dans une enceinte thermiquement isolée.

De même, le brevet US 5 410 912 (MKS 1994) dévoile un capteur de débitmètre massique, dans lequel deux résistances sont utilisées avec un montage en pont, ledit capteur étant indépendant des variations de température ambiante par l'intermédiaire d'une enceinte spécifique du tube au point de mesure. L'une des résistance sert au chauffage et l'autre à la mesure de résistance fonction de la température atteinte.

De nombreux autres documents brevets concernent des capteurs de débit massique. L'article "A calibration system for calorimetric mass flow devices" (Widmer, Felhmann, Rehwald, J. Phys, E: Sci. Instr Vol 15 1982 pp 213) présente de façon globale les diverses technologies existantes pour les débitmètres depuis 1900 et les évolutions. Un article de présentation de fond sur l'évolution technique récente des débitmètres massiques est fourni par "Récent Advances in Mass Flow Controls", pp 86, Solid State Technology, 9/94.

Le capteur selon le brevet DE 43 35 332 comprend un tube de mesure 12 doté d'un élément chauffant 18 médian de part et d'autre duquel sont disposés des capteurs de température 20, 22, 24, 26, 28 (d'un côté) et 30, 32, 34, 36, 38 de l'autre côté, soit 5 de chaque côté.

Comme mentionné en colonne 4, lignes 22 à 44, le but de ce montage est d'obtenir une pluralité de données à partir de la mesure d'un profil de température, cette mesure s'effectuant en plusieurs points amont et aval par rapport à l'élément chauffant.

Le brevet européen 0 809 090 décrit dans son résumé un débitmètre massique comportant un tube de circulation composite comprenant quatre segments tubulaires à haute conductivité thermique réalisés dans la longueur d'un tube ayant lui-même une relativement basse conductivité thermique, un film étant formé à la surface et tout autour de chacun des quatre segments tubulaires.

Le brevet DE 43 35 332, colonne 3. lignes 8 à 62 ne semble pas suggérer la possibilité de calculer la position des résistances sur le tube.

Le brevet DE 43 35 332 se base sur une multitude de points de mesure en amont et en aval pour déterminer le débit massique alors que l'invention de la Société QUALIFLOW se base sur le calcul de la position précise de la résistance (pont de mesure) amont et de la résistance aval pour établir le débit massique.

Comme on le voit, de nombreuses conceptions de capteurs thermiques de débit de fluide ont été proposées par les différents constructeurs, pour tenter de palier les problèmes de précision de mesure si le capteur est à l'extérieur du tube capillaire, de corrosion si le capteur est placé à l'intérieur du tube, de dérive du point de référence en fonction de la température intrinsèque du fluide, de phénomène parasite de transfert de chaleur à l'intérieur ou à l'extérieur du tube, d'imprécision de fabrication ou de non reproductibilité de la fabrication.

Les capteurs de faible débit (10 à 20 ce/minute) présentent plusieurs défauts principaux : temps de réponse, gamme de mesure peu étendue, précision (Drexel : "Digital mass flow controllers come of age", Solid State Technology 11/96).

Le temps de reponse des dispositifs existants est de l'ordre de la dizaine de secondes au niveau du capteur (mesuré en temps de convergence des oscillations à 67% de leur valeur d'équilibre), ce temps étant amélioré (réduit d'un facteur trois typiquement) par l'utilisation de carte électronique à PID (Proportionnel Intégrateur Dérivateur) qui anticipe les oscillations de mesure du capteur et prédit la valeur de convergence. Une carte digitale donnant les valeurs précises des paramètres de modélisation des oscillations du capteur permet encore d'améliorer ce temps, de façon artificielle.

Le problème du temps de réponse du capteur lui-même, qui est présent pour tous les capteurs de débit massique, est particulièrement sensible pour les débitmètre à faible débit, de l'ordre de 10 à 50 ce/minute, pour lesquels le temps de convergence du capteur peut atteindre plusieurs minutes. Ces capteurs sont alors très difficiles à étalonner précisément (voir "Flow Measurement and Control in Vacuum Systems for Microelectronics Processing", Sullivan, Jacobs, Solid State Technology, Oct 86). Le problème du temps de réponse, considéré comme un point critique, a été abordé en particulier dans la demande de brevet FR 2 530 014, avec une solution constituée d'une disposition particulière de trois enroulements bobinés autour du tube bout à bout, avec un enroulement amont de chauffage, un enroulement intermédiaire de mesure et de chauffage supplémentaire, et un enroulement aval de refroidissement entre les températures créées par les deux premiers enroulements.

Il est a noter que dans d'autres systèmes, on fait varier le courant de façon à maintenir la température toujours constante, et on en déduit alors le débit Il s'agit alors d'un problème de pilotage et donc de carte électronique plus complexe (voir EP 0 522 496 A1. Nippondenso, 1992).

La présente invention propose un procédé de réalisation d'un capteur pour débitmètre massique permet une fabrication de capteurs de caractéristiques connues précisément, reproductibles et stables dans le temps.

Selon des dispositions particulières, le procédé de réalisation d'un capteur pour débitmère massique comportant un tube capillaire de circulation du fluide en parallèle avec le circuit principal de circulation du fluide et destiné à être incorporé dans un circuit de circulation de fluides gazeux, constitué de moyens de chauffage du tube capillaire et de moyens de mesure de température en amont et en aval de ce moyen de chauffage distincts dudit moyen de chauffage, les moyens de mesure de température prennent la forme de deux résistances réalisées par dépôt de façon externe sur le tube capteur, l'une en amont du moyen de chauffage, l'autre en aval de ce moyen, une couche isolante étant préalablement déposée sur le tube, se caractérise en ce que la position relative des résistances est déterminée par un modèle de calcul analytique qui distingue les différents flux thermiques, par longueur de tube, entrant en jeu dans le capteur ; le flux axial de conduction thermique dans le tube, le flux radial échangé entre l'environnement du tube et la puissance injectée par unité de longueur.

L'invention vise également le procédé de réalisation de tube capteur destiné à être incorporé dans un débitmètre massique, comportant les étapes suivantes :

- calcul de la distance de positionnement des résistances en fonction des équations caractérisant les températures du tube et de l'écoulement gazeux,
- dépôt de la couche isolante au canon à électrons, par ajout d'oxygène dans l'enceinte.
- puis dépôt des résistances en platine, au canon à électrons, sur des capillaires isolés par la couche de zircone, à travers des masques de Nickel, à une pression résiduelle inférieure à 10-6 Torr, sur une épaisseur de quelques milliers d'Angströms.
- puis dépôt des contacts en platine, au canon à électrons, sur des capillaires isolés par la couche de zircone, à travers des masques de Nickel, à une pression résiduelle inférieure à 10-6 Torr, sur une épaisseur de quelques microns.

Le procédé de réalisation de capteur selon l'invention se caractérise en ce que la longueur de la bobine de fil résistif constituant l'élément chauffant, l'emplacement et la longueur des résistances de température sont déterminés par le modèle de calcul.

Suivant une autre disposition, le procédé se caractérise en ce que le calcul de la distance de positionnement des résistances de mesure par rapport au moyen de chauffage est fait en fonction des équations caractérisant les températures du tube et de l'écoulement gazeux.

Le procédé se caractérise également en ce que le dépôt de la couche isolante est réalisé au canon à électrons, par ajout d'oxygène dans l'enceinte.

Le procédé se caractérise également en ce que le dépôt des résistances de mesure est réalisé au moyen d'un canon à électrons, sur des capillaires isolés par une couche de zircone à travers des masques de Nickel.

Le procédé se caractérise également en ce que le dépôt des contacts en platine est réalisé au moyen d'un canon à électrons, sur des capillaires (6) isolés par la couche de zircone à travers des masques de Nickel.

Le procédé se caractérise encore en ce que le dépôt des contacts ou éléments sensibles en platine est réalisé à une pression résiduelle inférieure à 10-6 Torr.

Le procédé se caractérise encore en ce qu'il compoxte en outre en fin de traitement une étape de recuit des capteurs de une heure à 300°C.

La détermination de la position des points correspondant à une différence maximale de température entre les résistances de mesure est réalisée par utilisation des équations caractérisant les températures du tube d'une part et de l'écoulement d'autre part, ce que ne permettent pas avec précision les modèles théoriques traditionnels à une seule équation. Ces calculs ont été confirmés par des calculs numériques réalisés avec un logiciel de simulation.

Le choix de dépôt de l'isolant et des éléments de mesure au canon à électrons permet d'obtenir un contact extrêmement intime des résistances avec le tube isolé, donc un temps de réponse très court du capteur.

Les capteurs précédemment connus, au contraire, utilisent un dépôt épais collé et non déposé, avec des questions de fiabilité du contact et donc de reproductibilité de la mesure réalisée par ces capteurs. Il est également possible ici de réaliser une couche de dépôt d'épaisseur réduite à 2,5 microns au lieu des dizaines de microns couramment connus.

Enfin, une procédure reproductible est réalisée, avec donc la capacité à produire en grande série des capteurs de caractéristiques exactement identiques.

Le choix de cette technologie permet également de réaliser des résistances sur des surface courbes de capteurs (tube cylindrique), ce que ne permettent pas correctement les technologies précédentes.

Selon un mode de réalisation préféré, le procédé de réalisation de tube capteur se caractérise en ce qu'il comporte en outre, en fin de traitement, une étape de recuit des tubes de une heure à 300°C.

La description qui va suivre, faite en regard des dessins annexés dans un but explicatif permet de mieux comprendre les avantages, buts et caractéristiques de l'invention.

La figure 1 représente le schéma fonctionnel d'un débitmètre de technologie classique.

La figure 2 montre le principe de fonctionnement classique d'un capteur de débit massique.

La figure 3 représente le capteur vu de dessus et de côté.

La figure 4 montre les écarts de température créés par un débit de gaz à pleine échelle le long du capteur.

La figure 5 montre la géométrie d'un élément résistif sensible du capteur.

La figure 6 montre les temps de réponse comparés d'un capteur classique et d'un capteur selon l'invention.

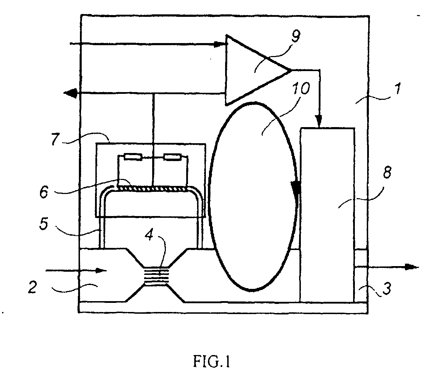

Tel que schématisé selon une disposition classique sur la figure 1, un débitmètre 1 est inséré sur une ligne de circulation de gaz, et comporte une entrée de gaz 2 et une sortie de gaz 3 (le sens de circulation du gaz est symbolisé par des flèches). Le circuit de gaz présente dans le débitmètre une restriction laminaire 4 de la section du tube, avec en parallèle un passage de dérivation (bypass) 5 qui fait circuler une partie du flux gazeux dans un tube capillaire 6 dans le capteur 7. Le débitmètre 1 comporte également une vanne 8 de contrôle du flux gazeux 2 qui régule le débit et un circuit électronique 9 qui est de type comparateur (P.T.D. c'est à dire Proportionnel Intégrateur Dérivateur) entre une consigne transmise de l'extérieur et la mesure réalisée par le capteur. Une boucle de contrôle 10 de type connu de l'homme de l'art réalise l'asservissement de fonctionnement du débitmètre 1.

En ce qui concerne son principe, le capteur 7 reçoit et chauffe une petite partie du débit laminaire (à pleine échelle 10 cm$^3$/mn), qui est proportionnelle au débit total. Le débit massique est estimé à partir du transfert thermique qu'il engendre : le profil de température sans circulation de gaz 11 le long du tube 6 du capteur 7 chauffé sur une partie de sa longueur est modifié en un profil dissymétrique 12 lorsque du gaz circule dans le tube 6, et cette différence de température $\Delta$T entre l'amont 13 et l'aval 14 du tube est une mesure du débit massique.

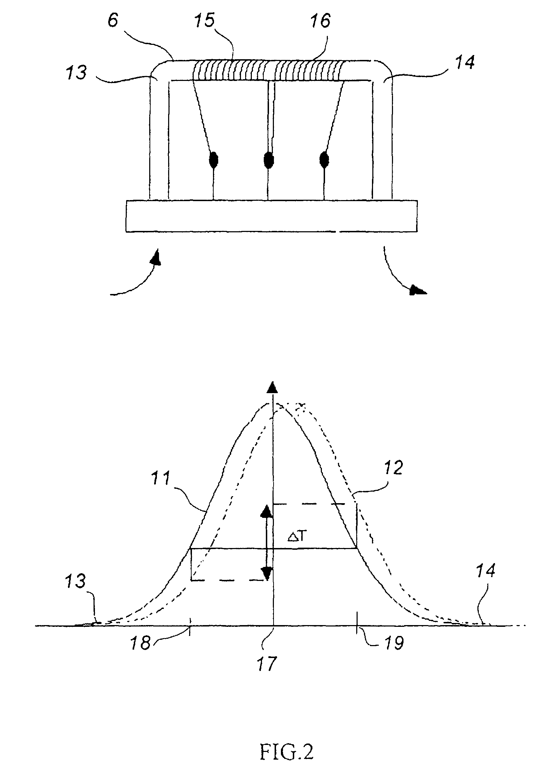

Le capteur de débit, dans le dispositif classique non conforme à l'invention, comporte comme on le voit sur la figure 2 deux bobines 15, 16 de fil résistif, qui assurent deux fonctions simultanément : le chauffage et la mesure de la température.

Cette mesure de température est obtenue en mesurant la variation des deux résistances, montées de façon classique dans un pont de Wheatstone. L'application d'un courant constant entre les bornes des résistances qui sont choisies de valeur équivalente R (à même température) provoque le chauffage du tube capteur en deux endroits proches.

En l'absence de circulation de gaz dans le capillaire, la répartition de température est représentée par la courbe 11 sur la figure 2 (la courbe présente la valeur de la température en ordonnée, et la distance le long du tube en abscisse) et est naturellement symétrique par rapport au centre 17 des deux résistances. Au contraire, dans le cas de circulation de gaz dans le tube (courbe 12), la répartition de température est asymétrique, et on observe entre deux points équidistants 18, 19 du centre 17 des résistances une différence de température $\Delta$T, qui se traduit par des mesures de résistance différentes pour les deux éléments résistifs, R-$\delta$R et R+$\delta$R.

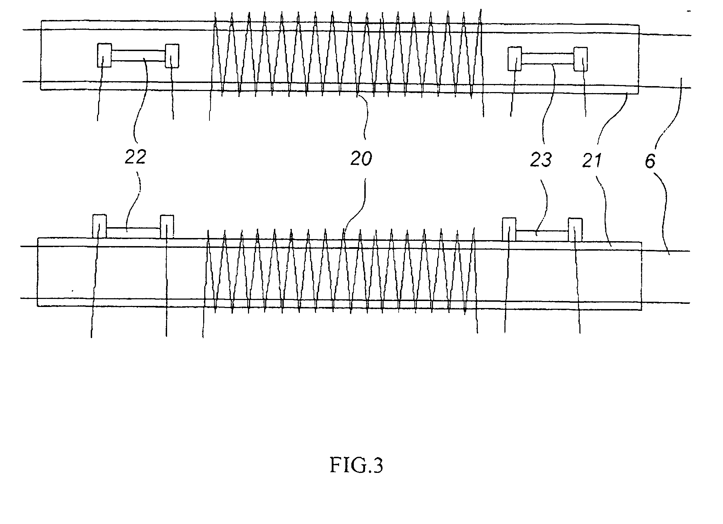

La structure du capteur selon l'invention est un capteur du type dit "à 6 fils", dont les fonctions chauffage et mesure sont séparées, comme on le voit sur la figure 3. Le chauffage est assuré par un fil résistif 20 en alliage Nickel Chrome, bobiné autour du tube 6. Le tube 6 présente une couche isolante 21 et deux moyens de mesure 22, 23 de température, qui sont des résistances variables avec la température, obtenus par la technologie des couches minces. Le fil bobiné 20 de chauffage doit avoir une résistance faiblement variable avec la température, au contraire des résistances de mesure 22, 23. On a au total 6 fils de connexion du capteur (2 par résistance de mesure et 2 pour le fil résistif), d'où son nom.

Le calcul de la position des résistances de mesure 22, 23 par rapport à la position du fil résistif 20 nécessite une présentation du modèle de calcul analytique utilisé ici, qui distingue la température du gaz circulant dans le tube 6 de la température du tube 6 elle-même.

Ce modèle distingue les différents flux thermiques, par longueur de tube, entrant en jeu dans le capteur : le flux axial de conduction thermique dans le tube 6, le flux radial échangé entrez le gaz et le tube, le flux radial échangé entre l'environnement du tube et le tube, la puissance injectée par unité de longueur P (en W/m).

Dans les calculs, il est considéré que cette puissance est injectée dans l'épaisseur du tube. L'environnement du tube a une résistance thermique notée $R_T$ par unité de longueur (Km $W^{-1}$). Le tube a une section S ($m^2$), et une conductivité thermique k (W $m^{-1}$ $K^{-1}$).

La température du gaz, $\theta_g$ (K), et la température du tube $\theta_p$ (K), sont toutes les deux les élévations de température par rapport à la température ambiante. Elles ne dépendent que de leur position x le long du tube 6, dont l'origine est le centre 17 de la bobine de chauffage.

Pour un petit élément du tube, la somme de ces différents flux thermiques doit être nulle en régime permanent. Ceci amène à l'équation suivante:

$$kS\frac{d^2\theta_p}{dx^2} + Nu\ \pi\ \lambda(\theta_\mu - \theta_p) - \frac{1}{R_T}\theta_p + P = 0 \qquad (1)$$

où Nu est le nombre de Nusselt. Pour un débit laminaire dans un tube chauffé à puissance constante, sa valeur moyenne est de 4,36. $\lambda$ (W $m^{-1}$ $K^{-1}$), la conductivité thermique du gaz, et Cp (J $Kg^{-1}$ $K^{-1}$), la capacité thermique du gaz sont choisies à une température moyenne. $F_m$ est le débit massique de gaz (kg $s^{-1}$) dans le capteur.

D'autre part, la somme du. flux transporté par le gaz et du flux échangé entre le gaz et le tube doit être nulle également :

$$C_p F_m\frac{d\theta_g}{dx} + Nu\ \pi\ \lambda(\theta_g-\theta_p) = 0 \qquad (2)$$

Le tube est divisé en trois zones. Pour un tube d'une longueur $2\times L$, chauffé par une bobine d'une longueur $2\times x_r$ ces trois zones sont : $-L< x < x_r$, la zone amont (P=0), $-x_r < x < x_r$ la zone de chauffage (P est égale à l'effet Joule par unité de longueur et de temps), $x_r < x < L$ la zone aval (P=0). La deuxième équation nous permet de remplacer dans la première la température du gaz par la température du tube.

On obtient une équation différentielle du troisième degré pour la température du gaz:

$$\frac{d^3\theta_g}{dx^3}+\frac{Nu\ \pi\lambda d^2\theta_g}{F_m\ C_p\ dx^2}-\left(\frac{1}{k\ S\ R_T}+\frac{Nu\ \pi\lambda}{k\ S}\right)\frac{d\theta_g}{dx}-\frac{Nu\ \pi\lambda}{F_m C_p\ k\ S\ R_T}\theta_g + \frac{Nu\ \pi\lambda}{F_m C_p\ k\ S}\frac{P}{} = 0 \qquad (3)$$

On peut noter $\omega1$, $\omega2$ et $\omega3$ les trois racines de l'équation caractéristique de la température du gaz. La solution générale de l'équation (3) s'écrit :

$$\theta_g(x) = Ae^{\omega_1 x} + Be^{\omega_2 x} + Ce^{\omega_3 x} - PR_T \qquad (4)$$

où A, B et C sont des constantes d'intégration.

L'équation 2 donne la température du tube où $\alpha = \frac{Nu\ \pi\lambda}{C_p}$

$$\theta_p(x) = A(1+\frac{\omega_1}{F_m\alpha})e^{\omega_1 x} + B(1+\frac{\omega^2}{F_m\alpha})e^{\omega_2 x} +C(1+\frac{\omega_3}{F_m\alpha})e^{\omega_3 x} - PR_T \qquad (5)$$

Dans chaque zone, les constantes A,B,C sont différentes et déterminées par les conditions aux limites.

A l'infini, très loin de la résistance chauffante, la température du gaz est la température ambiante, Cette hypothèse conduit à éliminer une ou deux exponentielles dans l'équation 4.

**EP 0 927 875 B1**

La température du gaz. ses première et deuxième dérivées sont continues à x⁻ x_r et x⁻ -x_r (voir equation 2).

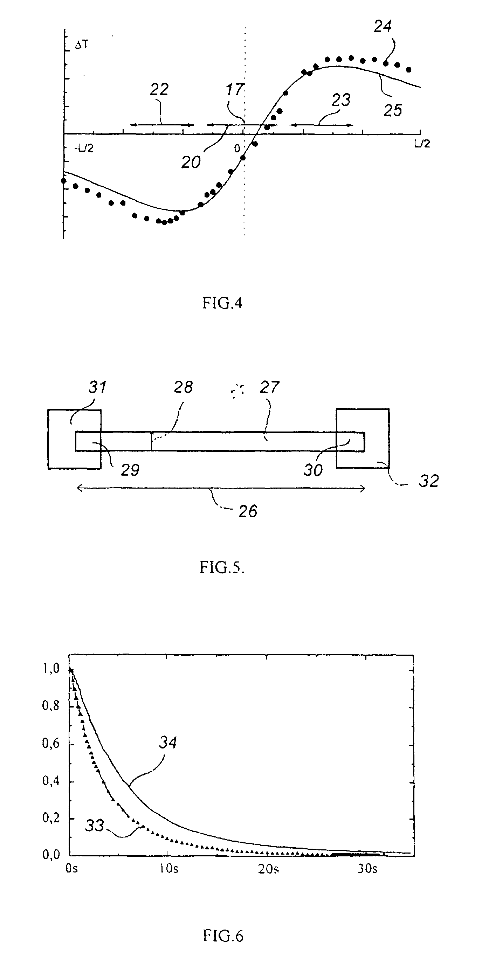

La figure 4 montre les écarts de température créés par un débit de gaz à pleine échelle le long du capteur 7. On constate un bon accord entre les valeurs mesurées au thermocouple (courbe 24) et le valeurs calculées (courbe 25). La figure 5 présente cet écart de température dû à un débit d'azote à pleine échelle, calculé et mesuré au thermocouple. La différence entre les températures, symétriquement entre l'amont et l'aval de la bobine chauffante, qu'elles soient calculées ou mesurées, est linéaire par rapport au débit de gaz.

Tous ces résultats montrent la fiabilité du modèle et permettent de l'étendre au tube capteur 6 avec sa couche isolante 21, sur lequel des mesures de température sont difficiles à effectuer.

Les différents modèles thermiques analytiques classiques du capteur considèrent que la température du gaz est égale à la température du tube.

- En fait, la température du gaz peut être très différente de la température du tube si le gaz a une faible diffusivité thermique, comme l'azote par exemple. Cette diffusivité thermique, noté $a = \frac{\lambda}{\rho C_p}$ apparaît dans la deuxième équation :

$$J_v \frac{d\theta_g}{dx} + Nu \; \pi a(\theta_g - \theta_p) = 0 \qquad (6)$$

où $J_v$ est le débit volumique (m³/s).

Par ailleurs, il faut noter qu'une simulation numérique montrerait un gradient de température radial dans les gaz à faible diffusivité thermique.

Considérer les propriétés du gaz constantes le long du tube et les choisir à une température moyenne ne doit pas engendrer d'erreur significative. En effet, la capacité calorifique de la plupart des gaz ne dépend pas de la température.

La variation de la densité des gaz en fonction de la température a cependant une influence si le capteur est parallèle à la force de gravité.

De ces calculs on déduit :

- la longueur de la bobine de fil résistif 20, pour avoir une bonne sensibilité,
- l'emplacement et la longueur des résistances de température 22, 23. Ils doivent être proche de la bobine 20, où la température du tube 6 est le plus modifiée par le gaz.

Les résistances 22, 23 formant ces capteurs doivent être assez courtes pour considérer le mesure de température comme locale mais assez longues pour que leur résistance R soit assez élevée.

Une fois les dimensions déterminées conformément à ce qui vient d'être exposé, la réalisation du capteur 7 se fait de la façon suivante. Dans la mise en oeuvre présentée à titre non limitatif (figure 3). le tube capillaire 6 a un diamètre extérieur de 0,9 mm pour environ 60 mm de longueur, il est composé d'acier inoxydable de type 316L ou équivalent. Le fil résistif 20 de chauffage utilisé est composé d'un alliage Nickel (75%) et Chrome (20%) qui a la particularité d'avoir une résistivité élevée (1,33 Ohm.mm2.m-1) et un faible coefficient de variation de la résistance en fonction de la température (10 ppm/°C). Il convient donc tout à fait pour assurer la fonction chauffage. Son diamètre est de 28 microns et il est alimenté par un courant de 12,5 mA.

La couche isolante 20 est de la zircone (ZrO2 choisie pour sa bonne stabilité et ses bonnes caractéristiques diélectriques, déposée par canon à électrons sur le tube capillaire 21 du capteur, sur une épaisseur de 2,5 microns. Elle couvre 20 mm sur les 60 mm de longueur du tube 6.

Sur cette couche, on dépose deux résistances de platine 22, 23 (par dépôt de platine à travers des masques de Nickel) qui constituent les résistances de mesure de température du tube. Le platine, matériau stable, inoxydable, obtenu avec une très grande pureté, a un fort coefficient de température (CTR : 3.9 10-3 °C-1). C'est pourquoi il est souvent utilisé pour la réalisation de résistances étalons. Ces deux résistances 22, 23, placées symétriquement par rapport au centre 17 de la bobine de fil résistif 20, sont montées dans un pont de Wheatstone. La longueur du bobinage en fil résistif de chauffage est d'environ 6 mm. et la distance entre les deux résistances de mesure 22, 23 est alors de 7 mm environ. Elles sont disposées symétriquement autour du centre 17 de la bobine de fil résistif 20.

La différence entre les températures, c'est à dire entre les deux résistances de mesure 22, 23, est alors proportionnelle au débit et sa mesure correspond donc à une mesure du débit circulant dans le capillaire 6.

La géométrie de chaque résistance de mesure 22, 23 en platine est détaillée sur la figure 5. Dans cette réalisation, la longueur 26 de l'élément sensible 27 de chaque résistance de mesure est d'environ 4,5 mm, et la largeur 28 est de 100 microns. L'élément sensible 27 a ses extrémités 29, 30 solidaires de deux contacts 31, 32 de connexion aux fils de mesure (non représentés), sous la forme de volumes de section rectangulaire également réalisés en platine, de 400 microns de large par 50 microns de long. Les contacts 31, 32 sont d'une épaisseur plus importante que les éléments sensibles 27, pour que leur résistance puisse être considérée négligeable lors de la mesure.

En ce qui concerne la fabrication proprement dite, la couche isolante (ZrO2) 21, les éléments sensibles 27 des résistances 22, 23 en platine, les contacts 31, 32 en platine sont réalisés dans cet ordre par dépôts de couches minces au canon à électrons.

Le substrat, le tube capteur 6 en acier inoxydable 316L, est maintenu sur un support chauffant. Afin d'obtenir deux résistances sensiblement égales, il est préférable que le porte-substrat soit en rotation pendant le dépôt.

Le dépôt de zircone se fait par ajout d'oxygène dans l'enceinte pour assurer le dépôt d'un couche oxydée isolante 21. Les paramètres de dépôt au canon à électrons de zircone sur les tubes capillaires 6 sont alors les suivants :

Cible : ZrO2
Epaisseur déposée : 2 à 3 microns
Pression résiduelle : inférieure à 10-6 Torr
Pression O2: 8 10-5 Torr
Température du substrat : 300 °C
Vitesse de dépôt : 20 à 40 Angströms par seconde

En ce qui concerne le dépôt des éléments sensibles 27 et des contacts 31, 32, les éléments sensibles en platine sont déposées, au canon à électrons également, sur des capillaires 6 isolés par la couche de zircone 21, à travers des masques de Nickel. Deux dépôts et deux manques sont nécessaires, du fait de la géométrie souhaitée pour les résistances de mesures 22, 23, l'un pour les éléments sensibles 27 en platine, et l'autre pour les contacts 31, 32. Ils sont obtenus à partir de la même cible de platine. Ces deux dépôts se font sous une pression résiduelle inférieure à 10-6 Torr L'épaisseur des résistances de mesure 22. 23 peut varier selon les besoins de 2000 à 7000 Angströms. Elle est à déterminer suivant la valeur de résistance R souhaitée.

Les paramètres de dépôt des résistances sont les suivants :

Distance cible-capillaires : 10 cm
Epaisseur des résistances : 2000 à 7000 Angströms
Température du substrat : 200 °C
Vitesse de dépôt : 13 à 20 Angströms par seconde

Les paramètres de dépôt des contacts sont les suivants :

Distance cible-capillaires : 8 cm
Epaisseur des contacts : 1 à 2 microns
Température du substrat : 200 °C
Vitesse de dépôt : 20 à 30 Angströrns par seconde

Une fois des dépôts réalisés, les capillaires 6 sont recuits pendant une heure à 300°C. pour fixer le coefficient de variation des résistances 22, 23 avec la température (selon un effet classiquement utilisé), la couche se reformant alors de façon stable. Ceci permet donc d'obtenir un capteur 7 susceptible de fonctionner à haute température. On comprend qu'on réalise ainsi une résistance plus fiable qu'une résistance bobinée, dont le coefficient varie avec le temps au cours du vieillissement du vernis protecteur et du fil.

Le mode de fonctionnement du dispositif est identique au fonctionnement classique, avec une mesure en pont de Wheatstone de la différence entre les résistances amont 22 et aval 23 dans le sens de circulation du fluide. La bobine de fil résistif de chauffage 20 est alimentée séparément, de façon contrôlée par la carte électronique 9.

Grâce à la technologie de dépôt utilisée, on obtient ici un contact intime entre les résistances 22, 23 et le tube 6, contact qui assure une plus grande rapidité du capteur 7, avec comme conséquence la plus favorable un temps de réponse considérablement réduit.

L'amélioration de temps de réponse du capteur grâce à l'invention est mesurée par exemple sur un débitmètre classique, avec une réduction du temps de convergence à 67 % du capteur de 6 secondes à 3,5 secondes en conditions équivalentes, ce qui constitue une amélioration très sensible. de l'ordre de 40%. La figure 6 montre le gain en temps de réponse réalisé par ce nouveau type de capteur (courbe 33) par rapport à un capteur classique (courbe 34).

Un autre avantage de ce capteur est de présenter des résistances de mesure 22, 23 fiables (la fiabilité étant lice en particulier à l'usage de platine), dans le sens qu'elles sont reproductibles et stables dans le temps, sans phénomène de vieillissement, ce qui constitue un gros avantage par rapport à la technologie précédente.

On comprend qu'il est possible en utilisant l'invention présente de réaliser d'un coup une grande série de pièces de caractéristiques exactement identiques (par exemple plusieurs centaines). ce qui permet à la fois des économies de fabrication et une excellente reproductibilité des résultats de mesure obtenus.

On remarque que deux résistances de mesure 22, 23 déposées en des zones précices sur le tube 6 sont suffisantes dans l'invention, dans le mesure où la température du tube est uniforme puisque le chauffage est réalisé uniformément autour du tube, il n'y a donc pas nécessité de résistances placées à plusieurs endroits du tube, ou couvrant une grande surface.

Encore un autre avantage de la présente invention réside dans le fonctionnement possible du dispositif à haute température, lié au recuit réalisé à 300°C après le traitement, qui confère au capteur une grande stabilité de pente en dessous de la température de recuit.

Dans une variante de procédé de dépôt, la pulvérisation cathodique est utilisée et fournit également des résultats facilement reproductibles.

Dans une autre variante relative au matériau de couche isolante, la zirconc yttria peut être utilisée pour remplacer la zircone pure.

Il est clair par ailleurs que si l'exemple de réalisation présente des tubes capillaires de 0.9 mm de diamètre extérieur (0,7 mm intérieur), d'autres diamètres sont possibles selon la gamme de débit envisagée pour le débitmètre, avec le même principe de traitement.

Le procédé de réalisation, tel qu'il a été exposé, peut être employé pour fabriquer des capteurs de débitmètre massique dans lesquels les fonctions chauffage et mesure sont confondues. Il faut alors prévoir de procéder à un dépôt sur tout le tour du tube, de manière à obtenir une fonction de chauffage uniforme du tube.

Enfin, on a mentionné jusqu'ici le dépôt pour les résistances de mesure seulement. Il est évidemment possible de remplacer la résistance de chauffage 20, réalisée par bobinage dans le mode de réalisation décrit à titre d'exemple, par une résistance de chauffage déposée.

La portée de la présente invention ne se limite pas aux modes de réalisation présentés mais s'étend au contraire aux perfectionnements et modifications à la portée de l'homme de l'art.


**Revendications**

1. Procédé de réalisation de capteur (7) pour débitmètre massique (1), ledit capteur comportant un tube capillaire (6) de circulation du fluide en parallèle avec le circuit principal de circulation du fluide et destiné à être incorporé dans un circuit de circulation de fluides gazeux, constitué de moyens de chauffage (20) du tube capillaire (6) et de moyens de mesure de température (22, 23) en amont et en aval de ce moyen de chauffage (20) distincts dudit moyen de chauffage, les moyens de mesure de température (22, 23) prennent la forme de deux résistances réalisées par dépôt de façon externe sur le tube capteur (6), l'une (22) en amont du moyen de chauffage (20). l'autre (23) en aval de ce moyen, une couche isolante (21) étant préalablement déposée sur le tube, **caractérisé en ce que** la position relative des résistances (22), (23) est déterminée par un modèle de calcul analytique qui distingue les différents flux thermiques, par longueur de tube, entrant en jeu dans le capteur ; le flux axial de conduction thermique dans le tube (6), le flux radial échangé entre l'environnement du tube et la puissance injectée par unité de longueur.

2. Procédé de réalisation de capteur selon la revendication 1 **caractérisé en ce que** la longueur de la bobine de fil résistif (20) constituant l'élément chauffant, l'emplacement et la longueur des résistances de température (22), (23) sont déterminés par le modèle de calcul.

3. Procédé de réalisation de capteur (7) suivant l'une quelconque des revendications 1 et 2 **caractérisé en ce qu'**il comporte les étapes suivantes :

   - calcul de la distance de positionnement des moyens de mesure de température (22, 23) par rapport au moyen de chauffage (20),
   - dépôt de la couche isolante (21).
   - dépôt des éléments sensibles (27) des résistances en platine (22, 23),
   - puis dépôt des contacts en platine (31, 32).

4. Procédé selon la revendication 3, **caractérisé en ce que** le calcul de la distance de positionnement des résistances de mesure (22, 23) par rapport au moyen de chauffage (20) est fait en fonction des équations caractérisant les températures du tube et de l'écoulement gazeux.

5. Procédé selon les revendications 1, 2 et 3, **caractérisé en ce que** le dépôt de la couche isolante (21) est réalisé au canon à électrons, par ajout d'oxygène dans l'enceinte.

**6.** Procédé selon l'une quelconque des revendications 3 à 5, **caractérisé en ce que** le dépôt des résistances de mesure (22, 23) est réalisé au moyen d'un canon à électrons, sur des capillaires (6) isolés par une couche de zircone (21), à travers des masques de Nickel.

**7.** Procédé selon l'une quelconque des revendications 3 à 6, **caractérisé en ce que** le dépôt des contacts (31, 32) en platine, est réalisé au moyen d'un canon à électrons, sur des capillaires (6) isolés par la couche de zircone (21), à travers des masques de Nickel.

**8.** Procédé selon l'une quelconque des revendications 6 ou 7, **caractérisé en ce que** le dépôt des contacts (31, 32) ou éléments sensibles (27) en platine, est réalisé à une pression résiduelle inférieure à 10-6 Torr.

**9.** Procédé selon l'une quelconque des revendications 3 à 8, **caractérisé en ce qu'**il comporte en outre, en fin de traitement, une étape de recuit des capteurs (7) de une heure à 300°C.

## Claims

**1.** A method for producing a sensor (7) for a mass flowmeter (1), said sensor comprising a fluid-circulation capillary tube (6) mounted in parallel relative to the fluid-circulation main circuit and intended to be integrated in a gaseous-fluid circulation circuit, heating means (20) for heating the capillary tube (6) as well as temperature measuring means (22, 23) that are provided upstream and downstream of the heating means (20) and are separate from said heating means, the temperature measuring means (22, 23) taking the form of two resistors formed by deposition on the exterior of the capillary tube (6), one resistor (22) being provided upstream of the heating means (20) while the other (23) is provided downstream of said means, and an insulation layer (21) being previously deposited on the tube, **characterized in that** the relative position of the resistors (22), (23) is determined on the basis of an analytical calculation model that discriminates between the different thermal flows, according to the length of tube, occurring in the sensor, i.e. the axial flow of thermal conductivity in the tube (6) and the radial flow exchanged between the surrounding medium of the tube and the power injected by unit of length.

**2.** A method for producing the sensor according to Claim 1, **characterized in that** the length of the resistive-wire coil (20) forming the heating element as well as the location and the length of the thermal resistors (22), (23) are determined on the basis of the calculation model.

**3.** A method for producing the sensor (7) according to any one of Claims 1 and 2, **characterized in that** it involves the following steps:

- calculating the positioning distance of the temperature measuring means (22, 23) relative to the heating means (20);
- depositing the insulation layer (21);
- depositing the sensitive elements (27) of the platinum resistors (22, 23); and
- depositing the platinum contacts (31, 32).

**4.** A method according to Claim 3, **characterized in that** the positioning distance of the measuring resistors (22, 23) relative to the heating means (20) is calculated on the basis of the equations that characterize the temperatures of the tube and the gaseous flow.

**5.** A method according to Claims 1, 2 and 3, **characterized in that** the insulation layer (21) is deposited using an electron gun and by adding oxygen into the chamber.

**6.** A method according to any one of Claims 3 to 5, **characterized in that** the measuring resistors (22, 23) are deposited using an electron gun onto capillaries (6) insulated by a zirconia layer (21) and through nickel masks.

**7.** A method according to any one of Claims 3 to 6, **characterized in that** the platinum contacts (31, 32) are deposited using an electron gun onto capillaries (6) insulated by a zirconia layer (21) and through nickel masks.

**8.** A method according to any one of Claims 3 to 7, **characterized in that** the platinum contacts (31, 32) or the sensitive elements (27) are deposited at a residual pressure of less than 10-6 Torrs.

9. A method according to any one of Claims 3 to 8, **characterized in that** it further involves a step at the end of the process for annealing the sensor (7) for one hour and at a temperature of 300° C.

**Patentansprüche**

1. Verfahren zur Ausführung des Messfühlers (7) für Massendurchsatzmesser (1), wobei der genannte Messfühler eine Kapillare (6) für den Umlauf von Fluid enthält, die parallel zum Hauptkreislauf des Fluids verläuft und dazu bestimmt ist, in einen Kreislauf für gasförmige Fluide eingebaut zu werden, bestehend aus Heizmitteln (20), der Kapillare (6) und Elementen für die Temperaturmessung (22, 23) vor und nach diesem Heizmittel (20), von dem genannten Heizmittel unterschieden, wobei die Elemente für die Temperaturmessung (22, 23) die Form von zwei Widerständen haben, die durch äußere Ablagerung auf dem Messrohr (6), einer (22) vor dem Heizmittel (20), der andere (23) nach diesem Heizmittel, realisiert werden, nachdem zuvor eine Isolierschicht auf dem Rohr aufgebracht wurde, **gekennzeichnet dadurch dass** die relative Position der Widerstände (22), (23) durch ein analytisches Berechnungsmodell bestimmt wird, das die verschiedenen Wärmeflüsse, durch Rohrlänge, bestimmt, die für den Messfühler von Bedeutung sind; der Axialfluss der Wärmeleitung in dem Rohr (6), der Radialfluss zwischen der Rohrumgebung und der eingespritzten Leistung pro Längeneinheit.

2. Verfahren zur Ausführung des Messfühlers entsprechend Patentanspruch 1 **gekennzeichnet dadurch, dass** die Länge der Drahtspule (20), die das Heizmittel bildet, die Stellung und die Länge der Temperaturwiderstände (22), (23) durch das Berechnungsmodell bestimmt werden.

3. Verfahren zur Ausführung des Messfühlers (7) entsprechend einem der Patentansprüche 1 oder 2 **gekennzeichnet dadurch, dass** es folgende Schritte umfasst:

   - Berechnung des Abstands der Position der Mittel zur Temperaturmessung (22, 23) in bezug auf das Heizmittel (20),
   - Anbringen der Isolierschicht (21)
   - Anbringen der sensiblen Teile (27) der Widerstände aus Platin (22, 23)
   - anschließend Anbringen der Kontakte aus Platin (31, 32).

4. Verfahren zur Ausführung des Messfühlers entsprechend Patentanspruch 3 **gekennzeichnet dadurch, dass** die Berechnung des Abstands der Position der Messwiderstände (22, 23) in bezug auf das Heizmittel (20) mittels der Gleichungen durchgeführt wird, die die Temperaturen des Rohrs und den Gasfluss kennzeichnen.

5. Verfahren entsprechend Patentanspruch 1, 2 und 3 **gekennzeichnet dadurch, dass** das Anbringen der Isolierschicht (21) mit einer Elektronenkanone, durch Zufügen von Sauerstoff in der Einfassung, durchgeführt wird.

6. Verfahren entsprechend einem der Patentansprüche 3 bis 5 **gekennzeichnet dadurch, dass** das Anbringen der Messwiderstände (22, 23) mit einer Elektronenkanone durchgeführt wird, mit Hilfe von Masken aus Nickel auf den durch eine Schicht aus Zirkonoxyd (21) isolierten Kapillaren (6).

7. Verfahren entsprechend einem der Patentansprüche 3 bis 6 **gekennzeichnet dadurch, dass** das Anbringen der Kontakte (31, 32) aus Platin mit einer Elektronenkanone durchgeführt wird, mit Hilfe von Masken aus Nickel auf den durch eine Schicht aus Zirkonoxyd (21) isolierten Kapillaren (6).

8. Verfahren entsprechend einem der Patentansprüche 6 oder 7 **gekennzeichnet dadurch, dass** das Anbringen der Kontakte (31, 32) oder sensiblen Teile (27) aus Platin bei einem Restdruck unter 10-6 Torr durchgeführt wird.

9. Verfahren entsprechend einem der Patentansprüche 3 bis 8 **gekennzeichnet dadurch, dass** es zusätzlich, am Ende der Behandlung, einen Schritt der Glühens der Messfühler (7) von einer Stunde bei 300°C beinhaltet.

FIG.1

FIG.2

FIG.3

FIG.4

FIG.5.

FIG.6